(19)

Europäisches
Patentamt
European
Patent Office
Office européen
des brevets

(11) **EP 2 980 550 B1**

(12) **EUROPEAN PATENT SPECIFICATION**

(45) Date of publication and mention
of the grant of the patent:
**25.01.2017   Bulletin 2017/04**

(51) Int Cl.:
***G01K 11/26*** *(2006.01)*

(21) Application number: **14306210.7**

(22) Date of filing: **28.07.2014**

(54) **Differential temperature surface sensor**

Oberflächensensor für unterschiedliche Temperaturen

Capteur différentiel de surface de température

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.02.2016   Bulletin 2016/05**

(73) Proprietors:
• **Centre National de la Recherche Scientifique
(C.N.R.S.)
75016 Paris (FR)**
• **ECOLE NATIONALE SUPERIEURE DE
MECANIQUE ET DES
MICROTECHNIQUES
25030 Besançon (FR)**

(72) Inventors:
• **Francois, Bruno
25000 Besancon (FR)**

• **Ballandras, Sylvain
25000 Besancon (FR)**
• **Richter, Denny
80807 Munich (DE)**

(74) Representative: **Lavoix
2, place d'Estienne d'Orves
75441 Paris Cedex 09 (FR)**

(56) References cited:
**EP-A2- 1 022 852     US-B2- 8 327 522**

EP 2 980 550 B1

**Description**

The invention relates to surface acoustic wave sensors, or SAW sensors.

The measurement of a physical quantity at high temperature (above 300°C) requires special materials and principles to withstand the corresponding environmental conditions.

As such, SAW sensors are good candidates, due to the existence of piezoelectric materials capable to operate at a very high temperature (around 1000°C). Quartz, Langasite, Gallium Orthophosphate, Aluminum Nitride, Zinc Oxide are examples of such piezoelectric materials.

In addition, SAW sensors can be remotely interrogated, providing a wireless measurement of a physical quantity.

Whatever this physical quantity is, it is better to put in place a differential measurement to guarantee the measure of an absolute physical quantity and to suppress correlated external perturbations affecting the sensor.

It is known from document WO2005/071375 or from document US20070445712, a differential temperature SAW sensor comprising two SAW resonators on a same substrate made of Quartz.

These two resonators work with the same type of surface acoustic waves, namely Rayleigh waves, but have each a specific dependency of the resonance frequency with the temperature.

More specifically, each resonator is characterized by a specific turnover temperature Tt, which corresponds to the maximum of the parabolic function relating the resonance frequency with the temperature.

Because the turnover temperature Tt of Quartz depends on the relative orientation between the alignment direction of the electrodes of the resonator and the propagation direction of the surface acoustic waves on the substrate, a SAW sensor exhibiting a required differential temperature sensitivity can be obtained through a careful choice of the relative orientation of each resonator.

Thus, Quartz appears to be very specific in that two different Rayleigh wave resonators can be made on the same AT cut (i.e. the single rotation cut, designated (YXl)/36° in the IEEE standard).

This is not the case for Langasite, where the propagation of Rayleigh waves in a single rotation cut does not allow for an easy and effective adjustment of the response of each resonator by a mere selection of their relative orientation on the same substrate.

More generally, except for pure shear waves (i.e. Bleustein-Gulyaev waves), there is no Langasite cuts allowing an easy and efficient adjustment of the temperature coefficients of frequency (TCF) by a mere selection of the relative orientation of the resonators on the substrate.

The aim of the invention is to answer this problem, by providing a method for the design of a differential temperature SAW sensor made with Langasite.

An object of the invention is a differential temperature SAW sensor according to the appended claims.

Preferred embodiments of the invention will now be described, by way of example only, with reference to the accompanying drawings, of which:

- Figure 1 is a schematic view of the structure of a preferred embodiment of a differential temperature SAW sensor;
- Figure 2 shows a section of the structure of the sensor of figure 1, zoomed around an electrode of one of the resonators;
- Figures 3 shows experimental results for TCF on a (YX/$t$)/48.5°/26.7° cut of Langasite for Rayleigh waves (electrodes made of Iridium);
- Figures 4 shows experimental results for TCF on a (YX) cut of Langasite for Rayleigh waves (electrodes made of Iridium);
- Figures 5 shows, for a (YX/$t$)/$\theta$/$\psi$ cut (according to the definition of IEEE Std-176), different values of $CTF_1$ as a function of cut angle $\theta$ and $\psi$ in the vicinity of $\theta$=48.5° and $\psi$=26.7°, with a curve corresponding to a zero value for the energy flux $\eta$ (also called power flow) angle ;
- Figures 6 shows, for a (YX/$t$)/$\theta$/$\psi$ cut, different values of $CTF_1$ as a function of $\theta$ and $\psi$ in the vicinity of $\theta$=48.5° and $\psi$=26.7°, with several curves corresponding to different values for the electromechanical coupling;
- Figures 7 shows, for a (YX) $\theta$/$\psi$ cut (according to the definition of IEEE Std-176), different values of $CTF_1$ as a function of $\theta$ and $\psi$ in the vicinity of $\theta$=0.° and $\psi$=0.° (the so-called (YX) cut), with several curves corresponding to different values for the electromechanical coupling;
- Figures 8 to 11 correspond to a frequency-temperature map for the first and second resonators of the sensor of figure 1, respectively between 400 and 520°C, 500 and 600°C, 600 and 680°C, and 700 and 770°C;
- Figure 12 shows the conductance at room temperature of the Ti/Pt-electrode-based transducer of the first resonator on a (YX/$t$)/48.5°/26.7° Langasite cut, for the four considered temperature intervals of the maps of figures 8 to 11;
- Figure 13 shows the conductance at room temperature of the Ti/Pt-electrode-based transducer of the second resonator on a (YX) Langasite cut for the four considered temperature intervals;
- Figure 14 shows the conductance at room temperature of the Ni-electrode-based transducer of the first resonator on a (YX/$t$)/48.5°/26.7° Langasite cut for the four considered temperature intervals;
- Figure 15 shows the conductance at room temperature of the Ni-electrode-based transducer of the second resonator on a (YX) langasite cut for the four considered temperature intervals;

- Figure 16 shows the influence of the metallization ratio on the conductance for the design of the first SAW device on the (YX/*t*)/48.5°/26.7° Langasite cut; and,
- Figure 17 shows the influence of the number of electrodes on the conductance in the first mirrors for the design of the first resonator on the (YX/*t*)/48.5°/26.7° Langasite cut.

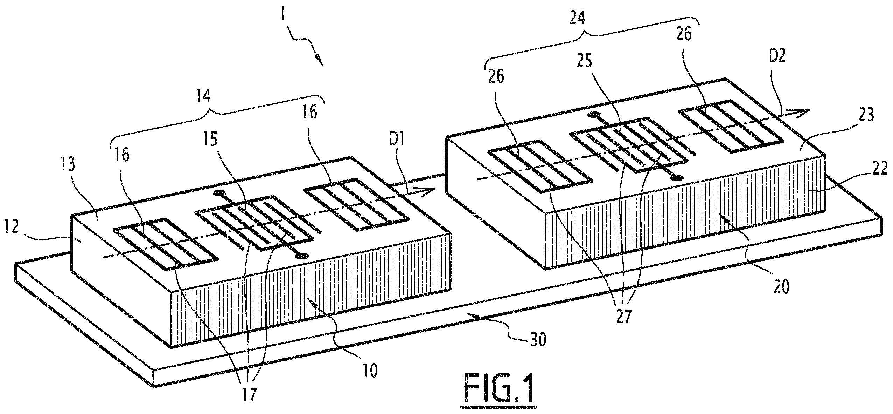

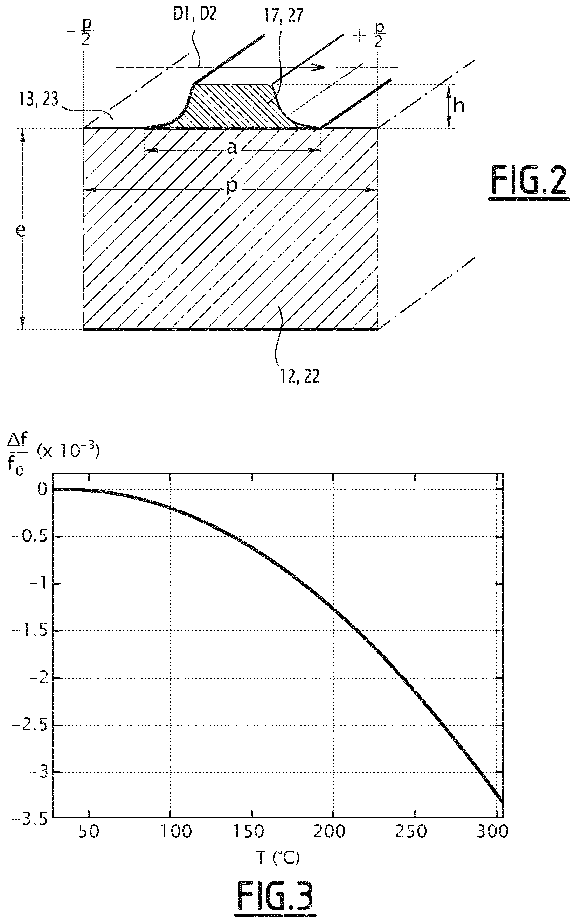

The preferred embodiment of a differential temperature SAW sensor 1 is shown on figures 1 and 2. This sensor comprises a first SAW device 10 and a second SAW device 20 supported mechanically on a common plate 30.

The first SAW device 10 comprises a first piezoelectric substrate 12, which is obtained from a crystal of Langasite, cut along a first cut.

The first SAW device 10 comprises a first resonator 14, which is fixed on a surface of the substrate 12. The surface acoustic waves will propagate on said surface of the substrate 12. This surface is called the first propagation surface and is referenced by number 13 in figure 1.

The first resonator 14 comprises a first transducer 15 extending along a first main direction D1.

Along direction D1, the first transducer 15 is located between two identical first mirrors 16.

The first transducer 15 and the first mirrors 16 are each made of two sets of first electrodes 17, aligned along the first direction D1. As known, the two sets form an interdigitated pattern.

The first electrodes 17 are formed from an electrically conductive material having a high melting temperature. This material is selected in the group comprising Ta/Pt, Cr/Au, Cr/Ni, Mo, W, Cr/Cu/Cr, Cr, Pb, Ir, Zr and the alloy thereof.

The second SAW device 20 comprises a second piezoelectric substrate 22, which is obtained from a crystal of Langasite, cut along a second cut.

The second device 20 comprises a second resonator 24, fixed on a surface of the second substrate, on which the surface acoustic waves will propagate. This surface is called the second propagation surface 23.

The second resonator 24 comprises a second transducer 25 extending along a second main direction D2.

Along direction D2, the second transducer 24 is placed between two identical second mirrors 26.

The second transducer 25 and the second mirrors 26 are made of two sets of second electrodes 27, aligned along the second direction D2. As known, the two sets form an interdigitated pattern.

The second electrodes 27 are formed from an electrically conductive material having a high melting temperature. This material is selected in the group comprising Ta/Pt, Cr/Au, Cr/Ni, Mo, W, Cr/Cu/Cr, Cr, Pb, Ir, Zr and their alloy. Preferably the material of the first and second electrodes is identical to make easier the method of realization of such a sensor.

The first and second devices are independent one from the other in terms of surface acoustic wave propagation.

As shown in figure 2, in a transducer, the width of an electrode 17, respectively 27, along the main direction D1, D2, is labeled $\underline{a}$, the thickness of an electrode along a normal direction to the propagation surface 13, 23, is labeled $\underline{h}$, the pitch between two successive electrodes is labeled $\underline{p}$, and the thickness of the piezoelectric substrate 12, 22, is labeled $\underline{e}$. The length of an electrode may vary along the pattern of the transducer, as it is well known for the skilled person.

<u>Selection of the Langasite cuts</u>

Rayleigh waves on single crystal piezoelectric Langasite substrates have a temperature sensitivity which depends of the crystallographic orientation.

This property leads to the possibility to design a differential temperature SAW sensor comprising two independent SAW devices selected on their relative TCF.

By an optimized selection of the Langasite cuts, it is possible to achieve a noticeable difference of thermal sensitivity between the two devices, which is suitable for high temperature applications.

The family of cuts identified by Naumenko et al. in patent application EP 1 022 852 are good candidates. However, this document is focused on the compensation of temperature effects in standard conditions of use (i.e. in the temperature range between - 20°C and and 80°C) in filter having a relatively reduce width (less than 1 %) in the frequency range of 50 to 300 MH$_Z$. In addition, this family of cuts suffers the drawback of a sensitivity to the angle of the energy flux η. This problem is inherent to the choice of a surface wave propagation axis out of the crystal axis.

According to the invention, the two substrates are cut according to the two following ranges.

The cut of the first substrate 12 is a (YXw/*t*)/$\varphi$/$\theta$/$\psi$ cut of a Langasite crystal, with $\varphi$ equal to $0 \pm 5°$, $\theta$ equal to $55 \pm 20°$ and $\psi$ equal to $32.5 \pm 7.5°$.

The cut of the second substrate 22 is a (YXw/*t*)/$\varphi$/$\theta$/$\psi$ cut of a Langasite crystal, with $\varphi$ equal to $0 \pm 5°$, $\theta$ equal to $5 \pm 20°$ and $\psi$ equal to $0 \pm 7.5°$.

These results come from the following method.

Figure 3 shows the measurement of the dependency of the frequency relative variation $\dfrac{\Delta f}{f_0}$ over temperature T for a (YX/*t*)/ 48.5°/26.7°cut of Langasite (the omission of w in the previous notation means a zero value for $\varphi$).

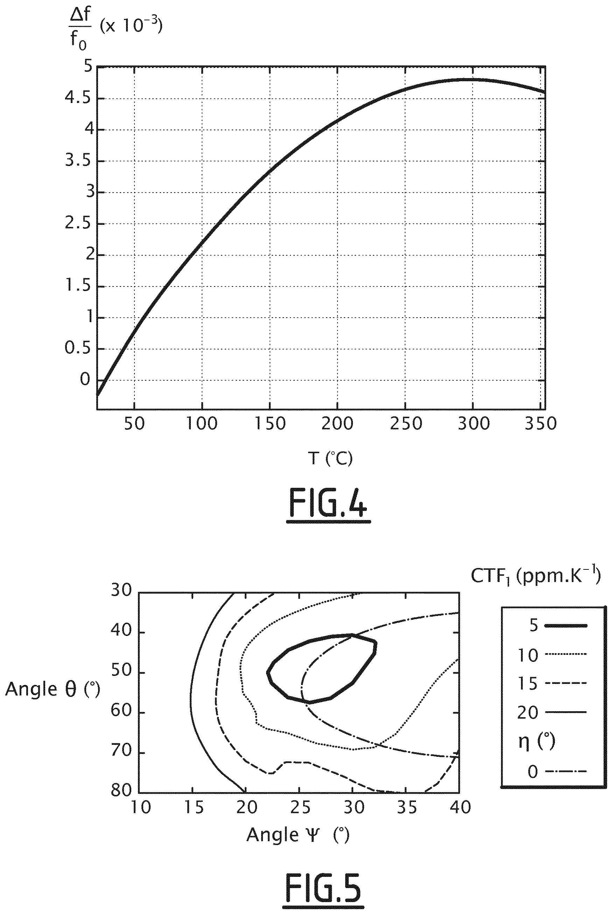

Figure 4 shows the measurement of the dependency of the frequency relative variation $\dfrac{\Delta f}{f_0}$ over temperature T for a (YX) cut of Langasite, which corresponds to a (YXw/*t*)/0°/0°/0° cut.

The curves of Figures 3 and 4 are each fitted with a quadratic function according to the following relation:

$$\frac{f - f_0}{f_0} = \frac{\Delta f}{f_0} = TCF_1 (T - T_0) + TCF_2 (T - T_0)^2 \qquad (1)$$

Where:

  T is the measured temperature;
  $T_0$ is a reference temperature, equal for example to 25°C;
  $TCF_1$ is a first order coefficient of the TCF;
  $TCF_2$ is a second order coefficient of the TCF;
  f is the resonance frequency of the sensor at temperature $T$ ;
  $f_0$ is the resonance frequency of the sensor at temperature $T_0$ ; and,
  $\Delta f$ is the difference between f and $f_0$

For the (YX/*t*)/48.5°/26.7°cut, $TCF_1^{10}$ and $TCF_2^{10}$ are equal to +3.5ppm.K$^{-1}$ and-45ppm.K$^{-2}$ respectively.

For the (YX) cut, $TCF_1^{20}$ and $TCF_2^{20}$ are equal to +38.5ppm.K$^{-1}$ and -65ppm.K$^{-2}$ respectively.

It is to be noted that the TCF coefficients can hardly be modified by a rotation of the orientation of the main direction of the transducer relative to the propagation direction of the acoustic waves on the propagation surface without degrading the other characteristics of the wave (coupling coefficient, beam-steering angle, directivity).

These measurements of the TCF coefficients allow the calibration of a physical model describing the behavior of the first substrate in one hand and the second substrate in the other hand. The physical model used is defined in the article by I. Silvestrova, P. A. Senushenkov, V. Bezdelkin and Yu. V. Pisarevsky: Proc. IEEE Freq. Contr. Symp. (1993) p. 348 , the article by I. M. Silvestorva, Yu. V. Pisarevsky, P. A. Senyushchenkov and A. I. Krupny: Sov. Phys. Solid State 28 (1986) 1613, and the article by A. A. Kaminskii, I. M. Silvestrova, S. E. Sarkisov and C. A. Denisenko: Phys. Status Solidi (a) V80 (1983) 607.

With this physical model, correctly calibrated, curves of figures 5 to 7 are calculated representing curves of isovalue for the $CTF_1$ coefficient over both angle $\theta$ and angle $\psi$.

In figure 5 is also represented the isovalue curve energy flux angle $\eta$ equal to zero.

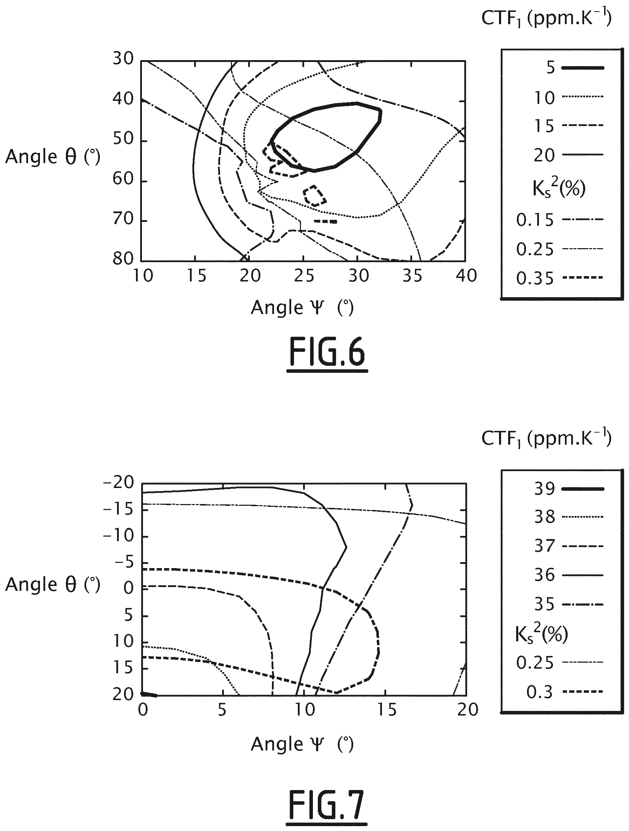

In figure 6 are also represented the isovalue curves for the electromechanical coupling $K_s^2$.

Figures 5 and 6 allow the identification of the best range for the cut of the substrate 12 of the first SAW device 10. "Best range" means the ranges both in $\theta$ and $\psi$ that maximize the $CTF_1$ coefficient.

In figure 7 are also represented the isovalue curves for the electromechanical coupling $K_s^2$.

Figure 7 allows the identification of the best range for the cut of the substrate 22 of the second SAW device 20. For this latter cut, only the electromechanical coupling is taking into account, because in the neighborhood of the (YX) cut, the energy flux angle n is always zero, for a propagation along axis X, and $CTF_1$ is nearly constant, what offers few degrees of liberty for optimizing the second cut.

The two ranges defined above are thus obtained.

Selection of the resonance frequency of the first and second devices

This step is dedicated to the optimization both of the temperature sensibility and the temperature range of the SAW sensor 1.

The range of frequencies on which the SAW sensor is intended to operate is defined.

In the present embodiment, sensor 1 is designed to operate in the so-called "Industrial Science Medical" band (ISM). Although some applications may not require such specification, this constraint makes sense as it limits the impact on the electronics (i.e. the reader should not be customized for each temperature range). One of the most used ISM band in the European Community is centered on 434 MHz and has a width of 1.7 MHz. Other ISM bands may be exploited such as the one at 866 MHz with a quite small frequency band width (~0.85 MHz) or the one used in the United States of America, centered in 915 MHz with a band width of about 27 MHz. The ISM band centered in 2.45 GHz imposes technology specification hardly compatible with the use of Rayleigh waves on Langasite.

Typically, for each first and second devices, a measurement in a temperature range having a width of 100°C and in an ISM frequency band corresponds to a maximum TCF difference of 39 ppm.K$_{-1}$. Therefore the range of temperature on which the SAW sensor is intended to operate is defined.

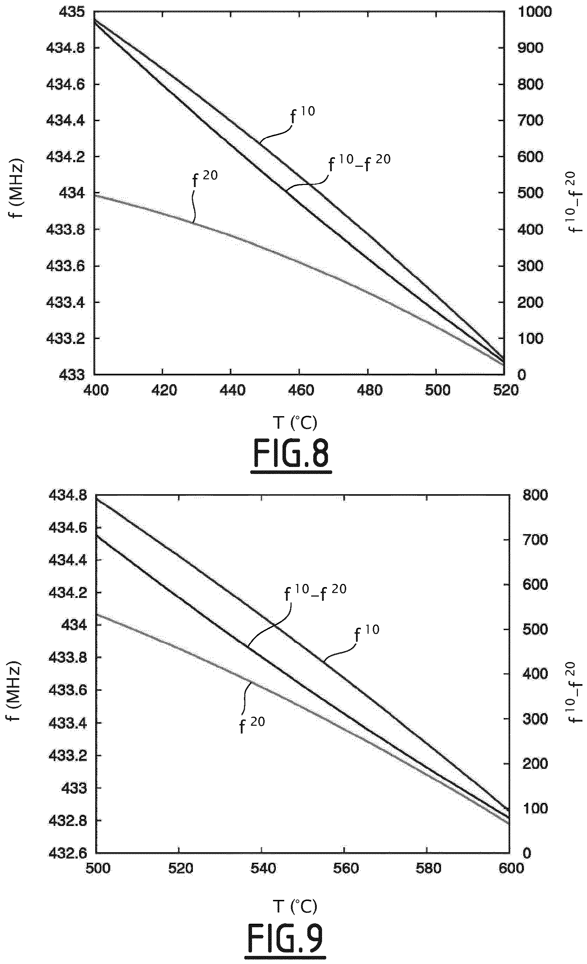

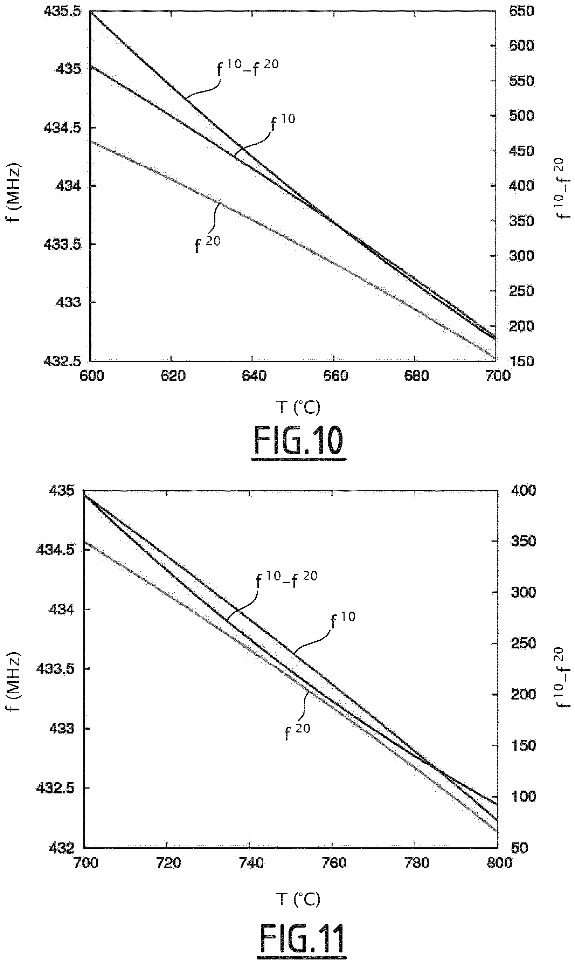

A frequency f versus temperature T map is established for a plurality of temperature intervals. For example, four temperature intervals are considered in figures 8 to 11. A first curve gives the dependency of the resonance frequency $f^{10}$ of the first resonator 10 over the temperature T, a second curve gives the dependency of the resonance frequency $f^{20}$ of the second resonator 20 over the temperature T, and the third curve gives the dependency of the difference between the resonance frequency $f^{10}$ of the first resonator 10 and the resonance frequency $f^{20}$ of the second resonator 20 over the temperature T.

On a given temperature interval, the first resonance frequency $f^{10}$ of the first device 10 is fixed near 435 MHz at the lower edge $T_{min}$ of the temperature intervals.

Then, the second resonance frequency $f^{20}$ of the second device 20 is defined to be certain to have $f^{10} - f^{20} > 0$ on the whole temperature interval. Because $f^{10}$ decreases with $T$ to reach the value of approximately 433.2 MHz at the upper edge $T_{max}$ of the temperature interval, the resonance frequency $f^{20}$ is set at 433.1 MHz at the upper edge of the temperature interval.

From these settings and the measured values of the TCF coefficients indicated above, $f_0^{10}$ and $f_0^{20}$ can be calculated on each point of the temperature interval.

The resonance frequencies of the four SAW sensor configurations of the four maps of figures 8 to 11 are reported in Table 1.

Table 1

| Temperature sub-range (°C) | 400-500 | 500-600 | 600-700 | 700-800 |
|---|---|---|---|---|
| device 10 $f_0^{10}$ (MHz) at $T_0$ = 25°C | 437.15 | 438.5 | 440.7 | 443 |
| device 20 $f_0^{20}$ (MHz) at $T_0$ = 25°C | 431.7 | 432.5 | 434.1 | 436.15 |
| $f^{10} - f^{20}$ excursion on the whole temperature range (kHz) | -800 | 650 | 470 | 300 |
| Linearized sensitivity (kHz.K$^{-1}$) | 8 | 6.5 | 4.7 | 3.0 |

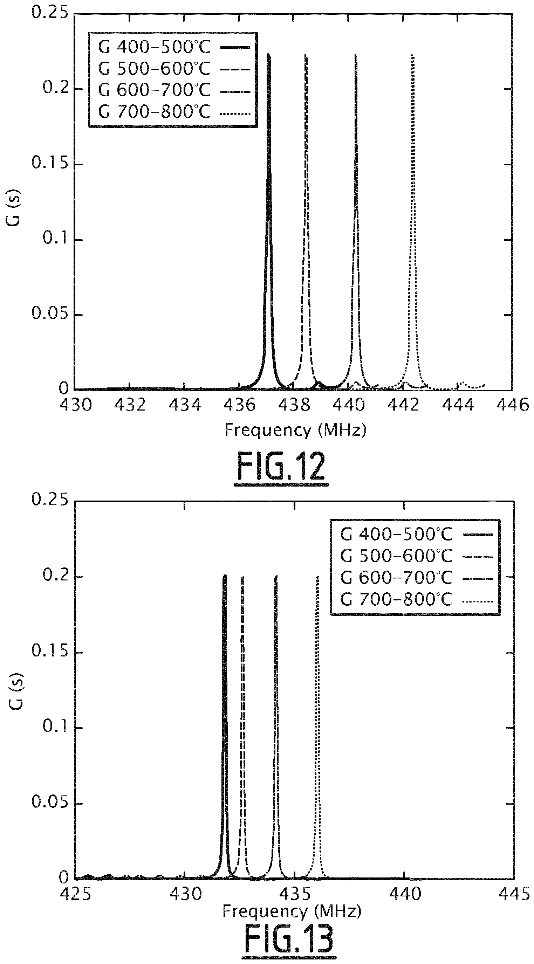

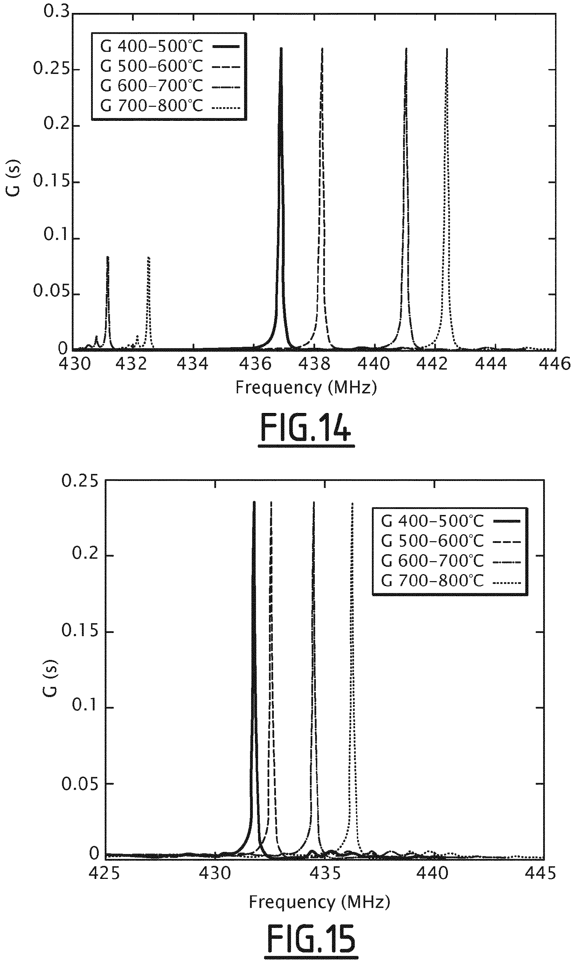

These results are shown in figures 12 and 13 and figures 14 and 15 for two types of electrodes. These figures represent the variation of the conductance G of the resonator 1 with the frequency for each of the four ranges of temperature. For figures 12 and 13, the electrodes are made of Platinum bond to the acoustic surface of the substrate through a layer of titanium. For figures 14 and 15, the electrodes are made of Nickel bond directly on the acoustic surface of the substrate.

Incidentally, because the spectral distance $f^{10} - f^{20}$ decreases with T, the sensor sensitivity is decreasing along the temperature range.

The first configuration is theoretically capable to operate up to 520°C, whereas the fourth is limited to 770°C (still considering the ISM band constraint).

The full temperature range has been limited to an upper temperature of 800°C, as the selected cuts hardly allow for sensing above this temperature (in the 800-900°C the differential sensitivity falls down to 1 kHz.K$^{-1}$).

These frequencies have been set considering Q factors that are large enough to allow for the detection of two resonances without overlapping problems. However, at room temperature, the actual Q factor of the resonators should not exceed 6000, even with optimized electrodes. It may thus reduce to a value between 1000 and 2000 at working temperature. This means that the simulation illustrated in the figures may prove to be optimistic and therefore the full temperature range for which the sensor allows for actual measurement may be reduced (particularly for temperatures above 700°C).

A solution for such issue consists in enlarging the spectral distance $f^{10} - f^{20}$ between the two resonators, at the price of missing the respect of ISM regulations. Although not considered in the present design method, this feature can be easily achieved by sorting resonators from one design another and assorting devices to form the differential sensor (for instance coupling one (YX) cut resonator operating in the 600-680 °C range with one (YX/$t$)/48.5°/26.7° cut resonator operating in the 700-770°C range).

Adjustment of the structure of the resonators

The general configuration of the SAW sensor having been determined, the next step is dedicated to a precise adjustment of the structure of each resonator, in order they effectively operate according to the resonance frequencies defined in Table 1.

Here, it is necessary to optimize both of the temperature sensibility and the temperature range of the propagation mode used (here the Rayleigh mode), taking into account the structure of the resonator and its impact on the acoustic waves in order to design a balanced sensor in terms of the two resonance frequencies of its spectral response.

To this end, a computer program is used in order to estimate the physical parameters of the resonators. This program is based on a model of a resonator, allowing the determination of the influence of these parameters on the Rayleigh wave propagation.

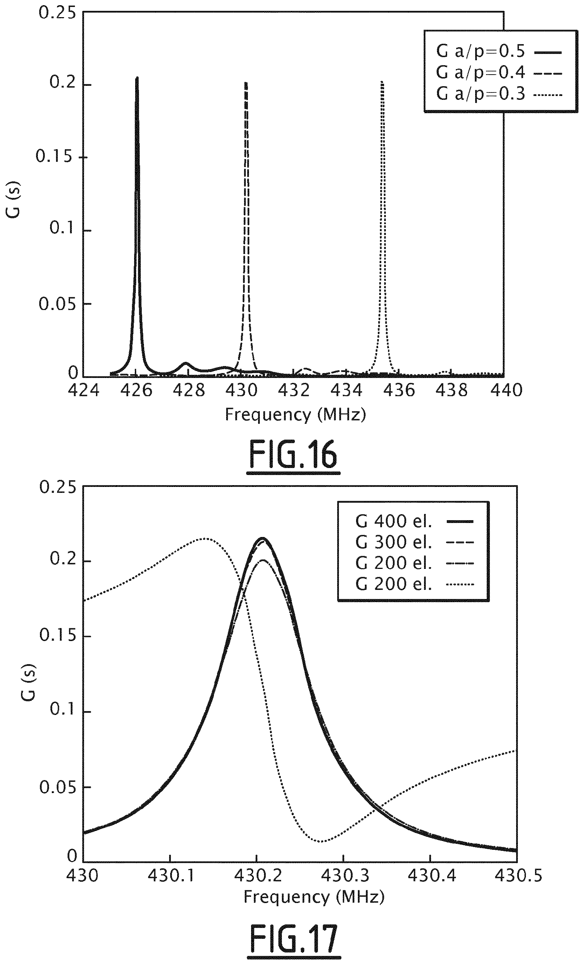

Simulations for each of the four SAW sensor configurations of Table 1 are computed. Several Figures such as figures 16 and 17 are obtained. In these figures the conductance G of the resonator is shown with respect of the frequency for each range of temperature.

For each configuration, the best values for the parameters of the first resonator 14, provided with Ti/Pt electrodes, made of a layer of 10 nm thickness of Ti and a layer of 150 nm thickness of Pt, and a 280 $\mu$m width are given in Table 2:

Table 2

| Electrode parameters | 400-500°C | 500-600°C | 600-700°C | 700-800°C |
|---|---|---|---|---|
| p ($\mu$m) | 2.95 | 2.94 | 2.925 | 2.91 |
| a/p ($\mu$m) | 0.4 | 0.4 | 0.4 | 0.4 |
| Number of electrodes in the transducer | 200 | 200 | 200 | 200 |
| p mirror ($\mu$m) | 2.97 | 2.96 | 2.945 | 2.93 |
| a/p mirror ($\mu$m) | 0.4 | 0.4 | 0.4 | 0.4 |
| Number of electrodes in each mirror | 300 | 300 | 300 | 300 |

The choice of a metallization ratio a/p equal to 0.4 actually corresponds to the best trade-off for Q factor and electromechanical coupling optimization considering the above Ti/Pt metallization. For example, a/p=0.5 corresponds to Q=2898 and ks$^2$=3.1, a/p=0.4 to Q=3282 and ks$^2$=3.3, and a/p=0.3 to Q=3452 and ks$^2$=2.9.

It turns out that 300 electrodes in the mirror are sufficient to reach the same Q factor as obtained experimentally with 400 electrodes. The number of electrodes of the mirror is thus reduced, yielding smaller resonator dimensions (less than 2.5 mm long for the configurations of Table 2). The trade-off is fixed to 300 electrodes as it clearly meets the asymptotic limit assuming equivalent loss of $5 \times 10^{-3}$ dB/$\lambda$. Assuming an equivalent loss coefficient of $5 \times 10^{-3}$ dB/$\lambda$ yields to a theoretical Q factor in excess of 3500, and the predicted coupling coefficient is larger than 0.3%.

Similarly, the best values for the parameters of the second resonator 24, provided with Ti/Pt electrodes of 10 nm and 150 nm thickness respectively and a 280 $\mu$m aperture, are given in Table 3.

Table 3

| Electrode parameters | 400-500°C | 500-600°C | 600-700°C | 700-800°C |
|---|---|---|---|---|
| p ($\mu$m) | 2.585 | 2.58 | 2.57 | 2.58 |
| a/p ($\mu$m) | 0.6 | 0.6 | 0.6 | 0.6 |
| Number of electrodes | 200 | 200 | 200 | 200 |
| p mirror ($\mu$m) | 2.585 | 2.58 | 2.57 | 2.558 |
| a/p mirror ($\mu$m) | 0.55 | 0.55 | 0.55 | 0.55 |
| Number of electrodes in each mirror | 200 | 200 | 200 | 200 |

The optimization of the second resonator is much easier to achieve because it does not exhibit any directivity property. To get rid of these directivity effects, the man of the art will refer to patent EP 2 156 554 B1 by Pennavaire, Pastureaud and Ballandras.

The resonance occurs at the upper edge of the frequency stop-band of the mirror, considering a mirror whose electrodes are 150 nm thick of Pt. Therefore, a particular attention must be paid to optimize the second resonator. As the stop-band of the mirror must recover the synchronism condition of the interdigitated transducer, it must be slightly shifted toward frequencies slightly higher than the resonance condition. This can be easily achieved by reducing the metallization ratio of the mirror electrodes. The reflection coefficient is much larger for the (YX) cut than for the (YX/*t*)/48.5°/26.7° cut. This means that the mirror grating can significantly be shorted compared to the structure of the first resonator. Moreover, as the phase velocity also is smaller on (YX) cut than on the (YX/*t*)/48.5°/26.7° cut, the structure of the second resonator is expected to exhibit a significantly smaller overall length than the first resonator.

Further, the Q factor of the second resonator is slightly larger than what obtained for the first resonator (4800 compared to 3500) but the electromechanical coupling Ks is smaller (0.26%). Although this means that both resonators will not meet absolutely the same electrical characteristics, nor the Q factor of the second resonator neither the electromechanical coupling of the first resonator are modified, because both these parameters play a role in the wireless interrogation of the sensor, and the designed structures actually corresponds to the best trade-off.

The same calculation has been performed considering Ni electrodes. In that configuration, electrode thickness of 200 nm, and width of 300 $\mu$m have been considered.

The results for the first resonator are shown in Table 4.

Table 4

| Electrode parameters | 400-500°C | 500-600°C | 600-700°C | 700-800°C |
|---|---|---|---|---|
| p ($\mu$m) | 3.06 | 3.07 | 3.09 | 3.10 |
| a/p ($\mu$m) | 0.6 | 0.6 | 0.6 | 0.6 |
| Number of electrodes | 200 | 200 | 200 | 200 |
| p mirror ($\mu$m) | 3.06 | 3.07 | 3.09 | 3.10 |
| a/p mirror ($\mu$m) | 0.7 | 0.7 | 0.7 | 0.7 |
| Number of electrodes in each mirror | 200 | 200 | 200 | 200 |

Parasites appear at low frequencies for the design on (YX/*t*)/48.5°/26.7° cut but they theoretically should remain out of the ISM band once achieving the nominal temperature.

The resonance mainly occurs at the end of the stop band, which is on line with the reported prediction, showing the quite large natural directivity properties of this configuration.

The results for the second resonator, with 200 nm thickness and 400 $\mu$m aperture Ni electrodes are shown in table 5 below.

Table 5

| Electrode parameters | 400-500°C | 500-600°C | 600-700°C | 700-800°C |
|---|---|---|---|---|
| p ($\mu$m) | 2.642 | 2.637 | 2.625 | 2.614 |
| a/p ($\mu$m) | 0.7 | 0.7 | 0.7 | 0.7 |
| Number of electrodes | 250 | 250 | 250 | 250 |
| p mirror ($\mu$m) | 2.652 | 2.647 | 2.635 | 2.624 |
| a/p mirror ($\mu$m) | 0.7 | 0.7 | 0.7 | 0.7 |
| Number of electrodes in each mirror | 300 | 300 | 300 | 300 |

The second resonator appears a bit longer here as the reflection efficiency on (YX) cut is less than on (YX/*t*)/48.5°/26.7° cut. Also the aperture and the number of electrodes must be increased to meet similar conductance as obtained on the standard Rayleighwave cut.

**Claims**

1. Differential temperature surface sensor (1), comprising a first surface acoustic wave device (10) and a second surface acoustic wave device (20), each surface acoustic wave sensor comprising a piezoelectric substrate (12, 22), having a propagation surface (13, 23), and a resonator (14, 24) having a transducer (15, 25) laying on said propagation surface, said first and second surface acoustic wave devices (10, 20) being independent one from the other in terms of surface acoustic wave propagation, **characterized in that**:

- said first surface acoustic wave device (10), comprises:

- a first piezoelectric substrate (12) formed from a (YXw/t)$\varphi$/$\theta$/$\psi$ cut of a Langasite crystal, where $\varphi$ is equal to 0 $\pm$ 5° , $\theta$ is equal to 55 $\pm$ 20° and $\psi$ is equal to 32.5 $\pm$ 7.5°, said first piezoelectric substrate having a first propagation surface (13);
- a first resonator (14) having a first transducer laying on said first propagation surface and having two sets of interdigitated first electrodes (17) formed from an electrically conductive material having a high melting temperature;

- said second surface acoustic wave device (20), comprising:

- a second piezoelectric substrate (22), formed from a (YXw/t)/$\varphi$/$\theta$/$\psi$ cut of a Langasite crystal, where $\varphi$ is equal to 0 $\pm$ 5° , $\theta$ is equal to 5 $\pm$ 20° and $\psi$ is equal to 0 $\pm$ 7.5°, said second piezoelectric substrate having a second propagation surface (23);
- a second resonator (24) having a second transducer (25) laying on said second propagation surface and having two sets of interdigitated second electrodes (27) formed from an electrically conductive material having a high melting temperature.

2. Sensor (1) according to claim 1, whose first surface acoustic wave device (10) is **characterized by** a temperature coefficient of frequency with a first order coefficient ($CTF_1$) between 0 and 15 ppm.K$^{-1}$ and whose second surface acoustic wave device (20) is characterize by a temperature coefficient of frequency with a first order coefficient ($CTF_1$) coefficient between 35 and 40 ppm.K$^{-1}$.

3. Sensor (1) according to claim 1 or claim 2, capable of operating at a temperature between 200 and 1000°C, preferably between 400 and 800 °C, more preferably between 500 to 700°C.

4. Sensor (1) according to any one of claims 1 to 3, capable of operating on a temperature range having a width between 50 and 150°C, preferably equal to 100°C.

5. Sensor according to any one of claims 1 to 4, wherein the first surface acoustic wave device (10) operates at a first resonance frequency ($f^{10}$) and the second surface acoustic wave device (20) operates at a second resonance frequency ($f^{20}$), the first and second resonance frequencies being preferably in an ISM frequency band.

6. Sensor (1) according to claim 5, wherein the difference between the first resonance frequency ($f^{10}$) and the second resonance frequency ($f^{20}$) is positive on the whole of a temperature range of operation of the sensor.

7. Sensor (1) according to any one of claims 1 to 6, wherein said first electrodes (17) are made of Ti/Pt and the structure of the first transducer is given by a pitch equal to 2.9 $\mu$m, a metallization ratio of 0.4, and a number of first electrodes ranging for 50 to 200.

8. Sensor (1) according to claim 7, wherein the first transducer (15) is placed between a pair of first identical mirrors (16), each first mirror having around 300 electrodes, and substantially the same pitch and metallization ratio than the first transducer (15).

9. Sensor according to claim 7 or claim 8, wherein said second electrodes (27) are made of Ti/Pt and the structure of the second transducer is given by a pitch equal to 2.5 $\mu$m, a metallization ratio of 0.6, and a number of first electrodes ranging from 50 to 200.

10. Sensor according to claim 9, wherein the second transducer (25) is placed between a pair of second identical mirrors (26), each second mirror having around 200 electrodes, and substantially the same pitch than the second transducer (25) but a metallization ratio of 0.55.

11. Sensor (1) according to any one of claims 1 to 6, wherein said first electrodes (17) are made of Ni and the structure of the first transducer is given by a pitch equal to 3.0 $\mu$m, a metallization ratio of 0.6, and a number of first electrodes ranging from 50 to 200.

**12.** Sensor (1) according to claim 11, wherein the first transducer (15) is placed between a pair of first identical mirrors (16), each first mirror having around 200 electrodes, with the same pitch than the first transducer (15) but a metallization ratio equal to 0.7.

**13.** Sensor (1) according to claim 11 or claim 12, wherein said second electrodes (27) are made of Ni and the structure of the second transducer is given by a pitch equal to 2.6 $\mu$m, a metallization ratio of 0.7, and a number of second electrodes ranging from 50 to 250.

**14.** Sensor (1) according to claim 13, wherein the second transducer (25) is placed between a pair of second mirrors (26), each second mirror having around 300 electrodes, with the same pitch and metallization ratio than the second transducer (25).

**15.** Sensor (1) according to any one of claims 1 to 6, wherein the material of the first and second electrodes (17, 27) is selected in the group comprising Ta/Pt, Ti/Pt, Cr/Au, Cr/Ni, Mo, W, Cr/Cu/Cr, Cr, Ni, Pb, Ir, Zr, Ni and the alloy thereof.

**Patentansprüche**

**1.** Oberflächensensor (1) für unterschiedliche Temperaturen, umfassend eine erste akustische Oberflächenwellenvorrichtung (10) und eine zweite akustische Oberflächenwellenvorrichtung (20), wobei jeder akustische Oberflächenwellensensor ein piezoelektrisches Substrat (12, 22) aufweist, welches eine Ausbreitungsoberfläche (13, 23) aufweist, und einen Resonator (14, 24), welcher einen Wandler (15, 25) aufweist, welcher auf der Ausbreitungsoberfläche aufliegt, wobei die erste und die zweite akustische Oberflächenwellenvorrichtung (10, 20) unabhängig voneinander in Bezug auf akustische Oberflächenwellenausbreitung sind,
**dadurch gekennzeichnet, dass**

- die erste akustische Oberflächenwellenvorrichtung (10) umfasst:

- ein erstes piezoelektrisches Substrat (12) gebildet aus einem (YXw/$t$)/$\varphi$/$\theta$/$\psi$ Schnitt eines Langasit-Kristalls, wobei $\varphi$ gleich 0 $\pm$ 5° ist, $\theta$ gleich 55 $\pm$ 20° ist und $\psi$ gleich 32,5 $\pm$ 7,5° ist, wobei das erste piezoelektrische Substrat eine erste Ausbreitungsoberfläche (13) aufweist;
- einen ersten Resonator (14), welcher einen ersten Wandler aufweist, welcher auf der ersten Ausbreitungsoberfläche aufliegt, und zwei Sätze von ineinander greifenden ersten Elektroden (17) aufweist, welche aus einem elektrisch leitfähigen Material gebildet sind, welches eine hohe Schmelztemperatur aufweist;

- die zweite akustische Oberflächenwellenvorrichtung (20) umfasst:

- ein zweites piezoelektrisches Substrat (22) gebildet aus einem (YXw/$t$)/$\varphi$/$\theta$/$\psi$ Schnitt eines Langasit-Kristalls, wobei $\varphi$ gleich 0 $\pm$ 5° ist, $\theta$ gleich 5 $\pm$ 20° ist und $\psi$ gleich 0 $\pm$ 7,5° ist, wobei das zweite piezoelektrische Substrat eine zweite Ausbreitungsoberfläche (23) aufweist;
- einen zweiten Resonator (24), welcher einen zweiten Wandler (25) aufweist, welcher auf der zweiten Ausbreitungsoberfläche aufliegt, und zwei Sätze von ineinander greifenden zweiten Elektroden (27) aufweist, welche aus einem elektrisch leitfähigen Material gebildet sind, welches eine hohe Schmelztemperatur aufweist.

**2.** Sensor (1) nach Anspruch 1, dessen erste akustische Oberflächenwellenvorrichtung (10) **gekennzeichnet ist durch** einen Temperaturkoeffizienten einer Frequenz mit einem Koeffizienten erster Ordnung (CTF$_1$) zwischen 0 und 15 ppm.K$^{-1}$ und dessen zweite akustische Oberflächenwellenvorrichtung (20) **gekennzeichnet ist durch** einen Temperaturkoeffizienten einer Frequenz mit einem Koeffizienten erster Ordnung (CTF$_1$) zwischen 35 und 40 ppm.K$^{-1}$

**3.** Sensor (1) nach Anspruch 1 oder Anspruch 2, dazu ausgebildet, bei einer Temperatur zwischen 200 und 1000°C, bevorzugt zwischen 400 und 800 °C, und bevorzugter zwischen 500 und 700°C, betrieben zu werden.

**4.** Sensor (1) nach einem der Ansprüche 1 bis 3, dazu ausgebildet, in einem Temperaturbereich, welcher eine Breite von 50 bis 150°C aufweist, bevorzugt gleich 100°C, betrieben zu werden.

5. Sensor nach einem der Ansprüche 1 bis 4, wobei die erste akustische Oberflächenwellenvorrichtung (10) mit einer ersten Resonanzfrequenz ($f^{10}$) arbeitet und die zweite akustische Oberflächenwellenvorrichtung (20) mit einer zweiten Resonanzfrequenz ($f^{20}$) arbeitet, wobei die ersten und zweiten Resonanzfrequenzen bevorzugt in einem ISM Frequenzband sind.

6. Sensor (1) nach Anspruch 5, wobei die Differenz zwischen der ersten Resonanzfrequenz ($f^{10}$) und der zweiten Resonanzfrequenz ($f^{20}$) positiv ist in einem gesamten Temperaturbetriebsbereich des Sensors.

7. Sensor (1) nach einem der Ansprüche 1 bis 6, wobei die ersten Elektroden (17) aus Ti/Pt gebildet sind und die Struktur des ersten Wandlers gegeben ist durch einen Abstand gleich 2,9 $\mu$m, ein Metallisierungsverhältnis von 0,4 und eine Anzahl von ersten Elektroden, welche von 50 bis 200 reicht.

8. Sensor (1) nach Anspruch 7, wobei der erste Wandler (15) zwischen einem Paar von ersten identischen Spiegeln (16) angeordnet ist, wobei jeder erste Spiegel etwa 300 Elektroden aufweist, und im Wesentlichen den gleichen Abstand und das gleiche Metallisierungsverhältnis wie der erste Wandler (15) aufweist.

9. Sensor nach Anspruch 7 oder Anspruch 8, wobei die zweiten Elektroden (27) aus Ti/Pt gebildet sind und die Struktur des zweiten Wandlers gegeben ist durch einen Abstand gleich 2,5 $\mu$m, ein Metallisierungsverhältnis von 0,6 und eine Anzahl von ersten Elektroden, welche von 50 bis 200 reicht.

10. Sensor nach Anspruch 9, wobei der zweite Wandler (25) zwischen einem Paar von zweiten identischen Spiegeln (26) angeordnet ist, wobei jeder zweite Spiegel etwa 200 Elektroden aufweist, und im Wesentlichen den gleichen Abstand wie der zweite Wandler (25), aber ein Metallisierungsverhältnis, welches gleich 0,55 ist, aufweist.

11. Sensor (1) nach einem der Ansprüche 1 bis 6, wobei die ersten Elektroden (17) aus Ni gebildet sind und die Struktur des ersten Wandlers gegeben ist durch einen Abstand gleich 3,0 $\mu$m, ein Metallisierungsverhältnis von 0,6, und eine Anzahl von ersten Elektroden, welche von 50 bis 200 reicht.

12. Sensor (1) nach Anspruch 11, wobei der erste Wandler (15) zwischen einem Paar von ersten identischen Spiegeln (16) angeordnet ist, wobei jeder erste Spiegel etwa 200 Elektroden aufweist, mit dem gleichen Abstand wie der erste Wandler (15), aber einem Metallisierungsverhältnis, welches gleich 0,7 ist.

13. Sensor (1) nach Anspruch 11 oder Anspruch 12, wobei die zweiten Elektroden (27) aus Ni gebildet sind und die Struktur des zweiten Wandlers gegeben ist durch einen Abstand gleich 2,6 $\mu$m, ein Metallisierungsverhältnis von 0,7, und einer Anzahl von zweiten Elektroden, welche von 50 bis 250 reicht.

14. Sensor (1) nach Anspruch 13, wobei der zweite Wandler (25) zwischen einem Paar von zweiten Spiegeln (26) angeordnet ist, wobei jeder zweite Spiegel etwa 300 Elektroden aufweist, mit dem gleichen Abstand und dem gleichen Metallisierungsverhältnis wie der zweite Wandler (25).

15. Sensor (1) nach einem der Ansprüche 1 bis 6, wobei das Material der ersten und zweiten Elektroden (17, 27) ausgewählt ist aus der Gruppe umfassend Ta/Pt, Ti/Pt, Cr/Au, Cr/Ni, Mo, W, Cr/Cu/Cr, Cr, Ni, Pb, Ir, Zr, Ni und den Legierungen davon.

**Revendications**

1. Capteur de température différentielle de surface (1), comprenant un premier dispositif à ondes acoustiques de surface (10) et un second dispositif à ondes acoustiques de surface (20), chaque capteur à ondes acoustiques de surface comprenant un substrat piézoélectrique (12, 22) ayant une surface de propagation (13, 23), et un résonateur (14, 24) ayant un transducteur (15, 25) reposant sur ladite surface de propagation, lesdits premier et second dispositifs à ondes acoustiques de surface (10, 20) étant indépendants l'un de l'autre en termes de propagation d'ondes acoustiques de surface,
   **caractérisé en ce que** :

   - ledit premier dispositif à ondes acoustiques de surface (10) comprend :

      - un premier substrat piézoélectrique (12) formé à partir d'une coupe (*YXw/t*)/$\varphi$/$\theta$/$\psi$ d'un cristal de Langasite,

où $\varphi$ est égal à 0 ± 5°, $\theta$ est égal à 55 ± 20° et $\psi$ est égal à 32,5 ± 7,5°, ledit premier substrat piézoélectrique ayant une première surface de propagation (13) ;

- un premier résonateur (14) ayant un premier transducteur reposant sur ladite première surface de propagation et ayant deux ensembles de premières électrodes interdigitées (17) formées à partir d'un matériau électroconducteur ayant une température de fusion élevée ;

- ledit second dispositif à ondes acoustiques de surface (20) comprenant :

- un second substrat piézoélectrique (22) formé à partir d'une coupe (YX$w$/$t$)/$\varphi$/$\theta$/$\psi$ d'un cristal de Langasite, où $\varphi$ est égal à 0 ± 5°, $\theta$ est égal à 5 ± 20° et $\psi$ est égal à 0 ± 7,5°, ledit second substrat piézoélectrique ayant une seconde surface de propagation (23) ;

- un second résonateur (24) ayant un second transducteur (25) reposant sur ladite seconde surface de propagation et ayant deux ensembles de secondes électrodes interdigitées (27) formées à partir d'un matériau électroconducteur ayant une température de fusion élevée.

**2.** Capteur (1) selon la revendication 1, dont le premier dispositif à ondes acoustiques de surface (10) est **caractérisé par** un coefficient de température de fréquence avec un coefficient de premier ordre ($CTF_1$) compris entre 0 et 15 ppm.$K^{-1}$ et dont le second dispositif à ondes acoustiques de surface (20) est **caractérisé par** un coefficient de température de fréquence avec un coefficient de premier ordre ($CTF_1$) compris entre 35 et 40 ppm.$K^{-1}$.

**3.** Capteur (1) selon la revendication 1 ou la revendication 2, apte à fonctionner à une température comprise entre 200 et 1 000°C, de préférence entre 400 et 800°C, de préférence encore entre 500 et 700°C.

**4.** Capteur (1) selon l'une quelconque des revendications 1 à 3, apte à fonctionner sur une plage de température ayant une largeur comprise entre 50 et 150°C, de préférence égale à 100°C.

**5.** Capteur selon l'une quelconque des revendications 1 à 4, dans lequel le premier dispositif à ondes acoustiques de surface (10) fonctionne à une première fréquence de résonance ($f^{10}$) et le second dispositif à ondes acoustiques de surface (20) fonctionne à une seconde fréquence de résonance ($f^{20}$), les première et seconde fréquences de résonance étant de préférence dans une bande de fréquence ISM.

**6.** Capteur (1) selon la revendication 5, dans lequel la différence entre la première fréquence de résonance ($f^{10}$) et la seconde fréquence de résonance ($f^{20}$) est positive sur la totalité de la plage de température de fonctionnement du capteur.

**7.** Capteur (1) selon l'une quelconque des revendications 1 à 6, dans lequel lesdites premières électrodes (17) sont constituées de Ti/Pt et la structure du premier transducteur est donnée par un pas égal à 2,9 $\mu$m, un rapport de métallisation de 0,4 et un nombre de premières électrodes allant de 50 à 200.

**8.** Capteur (1) selon la revendication 7, dans lequel le premier transducteur (15) est placé entre une paire de premiers miroirs identiques (16), chaque premier miroir ayant environ 300 électrodes, et sensiblement le même pas et le même rapport de métallisation que le premier transducteur (15).

**9.** Capteur selon la revendication 7 ou la revendication 8, dans lequel lesdites secondes électrodes (27) sont constituées de Ti/Pt et la structure du second transducteur est donnée par un pas égal à 2,5 $\mu$m, un rapport de métallisation de 0,6 et un nombre de premières électrodes allant de 50 à 200.

**10.** Capteur selon la revendication 9, dans lequel le second transducteur (25) est placé entre une paire de seconds miroirs identiques (26), chaque second miroir ayant environ 200 électrodes, et sensiblement le même pas que le second transducteur (25) mais un rapport de métallisation de 0,55.

**11.** Capteur (1) selon l'une quelconque des revendications 1 à 6, dans lequel lesdites premières électrodes (17) sont constituées de Ni et la structure du premier transducteur est donnée par un pas égal à 3 $\mu$m, un rapport de métallisation de 0,6 et un nombre de premières électrodes allant de 50 à 200.

**12.** Capteur (1) selon la revendication 11, dans lequel le premier transducteur (15) est placé entre une paire de premiers miroirs identiques (16), chaque premier miroir ayant environ 200 électrodes, avec le même pas que le premier transducteur (15) mais un rapport de métallisation égal à 0,7.

**13.** Capteur (1) selon la revendication 11 ou la revendication 12, dans lequel lesdites secondes électrodes (27) sont constituées de Ni et la structure du second transducteur est donnée par un pas égal à 2,6 $\mu$m, un rapport de métallisation de 0,7 et un nombre de secondes électrodes allant de 50 à 250.

**14.** Capteur (1) selon la revendication 13, dans lequel le second transducteur (25) est placé entre une paire de seconds miroirs (26), chaque second miroir ayant environ 300 électrodes, avec le même pas et le même rapport de métallisation que le second transducteur (25).

**15.** Capteur (1) selon l'une quelconque des revendications 1 à 6, dans lequel le matériau des premières et secondes électrodes (17, 27) est choisi dans le groupe comprenant Ta/Pt, Ti/Pt, Cr/Au, Cr/Ni, Mo, W, Cr/Cu/Cr, Cr, Ni, Pb, Ir, Zr, Ni et leur alliage.

FIG.1

EP 2 980 550 B1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005071375 A
- US 20070445712 A
- EP 1022852 A
- EP 2156554 B1

**Non-patent literature cited in the description**

- **I. SILVESTROVA ; P. A. SENUSHENKOV ; V. BEZDELKIN ; YU. V. PISAREVSKY.** *Proc. IEEE Freq. Contr. Symp.,* 1993, 348
- **I. M. SILVESTORVA ; YU. V. PISAREVSKY ; P. A. SENYUSHCHENKOV ; A. I. KRUPNY.** *Sov. Phys. Solid State,* 1986, vol. 28, 1613
- **A. A. KAMINSKII ; I. M. SILVESTROVA ; S. E. SARKISOV ; C. A. DENISENKO.** *Phys. Status Solidi,* 1983, 607